(19) Europäisches Patentamt
European Patent Office
Office européen des brevets

(11) **EP 2 814 902 B1**

(12) **FASCICULE DE BREVET EUROPEEN**

(45) Date de publication et mention
de la délivrance du brevet:
**25.07.2018 Bulletin 2018/30**

(51) Int Cl.:
***C09K 8/035*** (2006.01)   ***C09K 8/60*** (2006.01)
***C09K 8/68*** (2006.01)

(21) Numéro de dépôt: **13703606.7**

(86) Numéro de dépôt international:
**PCT/EP2013/052775**

(22) Date de dépôt: **12.02.2013**

(87) Numéro de publication internationale:
**WO 2013/120844 (22.08.2013 Gazette 2013/34)**

(54) **UTILISATION ET PROCEDES, METTANT EN OEUVRE UN AGENT INHIBITEUR DE GONFLEMENT DES ARGILES**

VERWENDUNG UND VERFAHREN UNTER NUTZUNG EINES MITTELS ZUR HEMMUNG DER QUELLUNG VON TON

USE AND METHODS, USING AN AGENT FOR INHIBITING THE SWELLING OF CLAYS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2012 FR 1251359**

(43) Date de publication de la demande:
**24.12.2014 Bulletin 2014/52**

(73) Titulaire: **RHODIA OPERATIONS**
**93306 Aubervilliers (FR)**

(72) Inventeurs:
 • **BADEL, Thierry**
   **F-69008 Lyon (FR)**
 • **CADIX, Arnaud**
   **F-93400 Saint-Ouen (FR)**

(74) Mandataire: **Chatelan, Florence Anne et al**
**Rhodia Opérations**
**85, avenue des Frères Perret - BP 62**
**69192 Saint-Fons Cedex (FR)**

(56) Documents cités:
**US-A- 2 909 404       US-A- 3 034 983**
**US-A1- 2002 155 956    US-A1- 2007 207 932**

 • **S.-C. TAM,R.J.P. WILLIAMS: "Electrostatic interactions between organic ions", J. CHEM. SOC. FARAD. TRANS. 1, vol. 80, 14 novembre 1983 (1983-11-14), pages 2255-2267, XP002685128,**
 • **L. DIOP ET AL: "Bis(triphenyltin)oxalate", APPL. ORGANOMET. CHEM., vol. 17, 8 avril 2003 (2003-04-08), pages 881-882, XP002685129,**

## Description

La présente invention a pour objet l'utilisation d'un nouvel additif en tant qu'agent inhibiteur de gonflement des argiles, notamment dans le domaine des forages. Plus précisément, la présente invention vise l'utilisation d'un sel de diamine et de diacide spécifique comme agent inhibiteur de gonflement des argiles en milieu aqueux, et des procédés de forage ou de fracturation hydraulique mettant en oeuvre ledit sel.

## CONTEXTE

Lors d'opérations de forage de puits, notamment de puits destinés à récupérer des gisements sous-terrain de pétrole et/ou de gaz, des fluides de forage destinés à lubrifier, nettoyer et refroidir les outils de forage et la tête de forage, et/ou à évacuer la matière dégagée lors de forages (roches déblayées ou déblais) sont utilisés. Les fluides de forage sont aussi utilisés pour nettoyer le puits. Ils fournissent également la pression nécessaire à supporter la paroi du puits avant consolidation. Les fluides sont usuellement appelés « boues de forage ». Après le forage, les parois du puits sont généralement consolidées par un matériau cimentaire.

Lors du forage de puits, en particulier lors du forage de puits destinés à la production de pétrole et/ou de gaz, on fore souvent à travers des roches argileuses, en particulier à travers des argiles schisteuse (« shale » en anglais).

Les problèmes posés par les formations argileuses sont bien connus. Lorsque l'on pénètre par forage dans ces formations en utilisant des fluides de forage à base d'eau, il se produit des réactions chimiques complexes au sein de la structure argileuse par échange ionique et hydratation.

Ces réactions ont pour conséquences un gonflement des argiles, un délitage ou une dispersion des particules argileuses de la formation traversée par le forage.

Ce gonflement des argiles pose des problèmes au niveau des parois du forage mais également au niveau du fluide de forage et de la roche réservoir.

Par « roche réservoir », on entend la formation rocheuse qui contient le pétrole et/ou le gaz à extraire.

Du fait de l'hydratation des argiles, des particules dispersées contaminent le fluide de forage et la roche réservoir, et le délitage nuit à la stabilité des parois du puits. Le gonflement de ces argiles engendre aussi des problèmes opérationnels en gênant l'écoulement du fluide ou le passage de l'outil de forage.

Le long des parois du puits, le gonflement crée des protubérances, ce qui gène la circulation du fluide de forage et des outils de forage. De plus, le gonflement peut mener à une désagrégation, créant des aspérités le long des parois. Ces aspérités et protubérances peuvent créer des points de faiblesse mécanique du puits.

Au niveau du fluide de forage, la matière argileuse désagrégée est libérée dans le fluide et pose des problèmes de contrôle de la viscosité du fluide : les matières argileuses, notamment en présence d'une concentration importante en sels (saumure), ont tendance à augmenter fortement la viscosité. Cette augmentation devient néfaste : si elle est trop importante, les outils de forage sont endommagés. Le puits peut même être rendu inutilisable.

De plus, les roches argileuses déblayées peuvent avoir tendance à s'agréger dans le fluide de forage (phénomène de « bit-balling »). De façon générale, on parle d'un phénomène d'accrétion. L'accrétion peut gêner la circulation des fluides et des outils. Ils peuvent de plus adhérer et s'agréger autour de la tête de forage et ainsi la bloquer.

Le problème posé par le gonflement des argiles lors du forage dans les formations argileuses est étroitement lié aux phénomènes d'interactions argile/fluide de forage, notamment lors du contact argile-eau.

## ART ANTERIEUR / PROBLEMES

Dans le domaine de l'exploitation pétrolière, les problèmes cités plus haut ont notamment été résolus en utilisant des fluides de forage non aqueux, par exemple un fluide dont la phase continue est à base d'hydrocarbure liquide. Mais le forage avec ces types de boues dites « à huile » présente de nombreux inconvénients : coût prohibitif du fluide, toxicité mais surtout pollution par l'huile des effluents et débris issus du forage. Les réglementations actuelles sur les rejets entraînent désormais des techniques et des coûts de traitement tels que la boue à huile est bien souvent impossible à mettre en oeuvre.

Ainsi actuellement, la recherche et le développement s'orientent essentiellement vers les systèmes aqueux afin de trouver des additifs qui limitent les phénomènes de gonflement des argiles. Ces additifs sont appelés « agents d'inhibition du gonflement des argiles », et ils visent à empêcher la pénétration du fluide dans les roches le long des parois, dans les roches déblayées en suspension, et à inhiber le gonflement et/ou la désagrégation.

Parmi ces additifs, on retrouve notamment :

- les sels minéraux (KCl, NaCl, $CaCl_2$, ...) dont le KCl est certainement le sel le plus couramment utilisé pour l'inhibition du gonflement des argiles. En effet, l'ion potassium est un bon inhibiteur qui réduit les répulsions électrostatiques entre les feuillets d'argile donc le gonflement des argiles. Bien que l'ion $Na^+$ ne soit pas un aussi bon inhibiteur que l'ion K$^+$, l'utilisation de NaCl est aussi répandue, notamment en combinaison avec les silicates, polyols ou methylglucosides. D'autres solutions de sels minéraux, tels que CaCl$_2$, ou CaBr$_2$, ZnCl$_2$, MgCl$_2$ ou MgBr$_2$ et ZnBr$_2$ sont aussi largement utilisées en tant qu'inhibiteur de gonflement. Cependant, on cherche de plus en plus à éviter l'utilisation de ces composés dans le domaine car les sels inorganiques, notamment de chlorure, ont un effet délétère sur les ciments utilisés pour consolider les parois des puits,

- les sels de monoacides organiques, notamment des formiates ou acétates de métaux alcalins en solution de formule RCOO$^-$M$^+$, avec R = H ou CH3 et M$^+$ = Na$^+$, K$^+$ ou Cs$^+$.

- les sels de diamine, comme décrit dans la demande de brevet US 2006/0289164, dont le contre-ion est un monoacide comme l'acide formique, un acide minéral, ou un autre acide tel qu'un hydroxyacide (malique ou citrique) ; et plus particulièrement les sels d'hexaméthylène diamine avec un acide minéral comme l'acide chlorhydrique ou un acide organique monofonctionnel comme l'acide formique, comme décrit dans la demande de brevet US 2002/0155956.

- les polymères destinés à consolider les parois (« well bore consolidation »). On utilise ainsi de manière courante des polyacrylamides partiellement hydrolysés (PHPA, « partially hydrolyzed polyacrylamide »). Le brevet FR 2185745 décrit une telle utilisation. Ces polymères forment un film polymérique à la surface des parois, encapsulent les roches déblayées, et inhibent ainsi l'hydratation des argiles. Les performances de ces polymères sont toutefois limitées, car ils ont tendance à rendre les fluides trop visqueux à forte concentration. Les performances de ces polymères sont de plus limitées dans des conditions de forage haute température haute pression (HTHP) de part leur stabilité hydrolytique limitée. En outre, ces polymères se dégradent lors de leur utilisation du fait de leur faible résistance au cisaillement. Des solutions de remplacement sont donc nécessaires.

Des législations de plus en plus contraignantes visent à limiter l'utilisation et/ou le risque de rejet de produits dangereux pour l'homme ou pour l'environnement. De tels additifs corrosifs comme l'hexaméthylène diamine, ou susceptibles d'émettre dans l'atmosphère des produits irritants et/ou corrosifs comme par exemple les hydroxyacides ou l'acide formique en cas d'acidification excessive d'une boue de forage, ne pourront peut être plus être utilisés dans certains pays, à plus ou moins brève échéance. Des solutions de remplacement sont donc nécessaires.

Il existe par ailleurs toujours un besoin de fournir des agents inhibiteur de gonflement des argiles encore plus performants dans leur application, et qui soient moins dangereux pour l'homme ou pour l'environnement.

<u>BREVE DESCRIPTION DE L'INVENTION</u>

A cet effet, la présente invention propose l'utilisation comme agent inhibiteur de gonflement des argiles en milieu aqueux, d'un sel de diamine et de diacide carboxylique, le diacide étant choisi parmi l'acide succinique, l'acide glutarique et l'acide méthylglutarique, et la diamine étant choisie parmi la 2-méthylpentaméthylènediamine et le 1,6-diaminohexane.

La présente invention vise enfin un procédé de forage dans lequel on met en oeuvre dans au moins une étape une composition de fluide de forage comprenant au moins un sel de diamine et de diacide, le diacide étant choisi parmi l'acide succinique, l'acide glutarique et l'acide méthylglutarique, et la diamine étant choisie parmi la 2-méthylpentaméthylènediamine et le 1,6-diaminohexane, un vecteur liquide et éventuellement des additifs dissous ou dispersés dans le vecteur liquide, et un procédé de fracturation hydraulique dans lequel on met en oeuvre dans au moins une étape une composition de fluide de fracturation hydraulique comprenant au moins un sel de diamine et de diacide, le diacide étant choisi parmi l'acide succinique, l'acide glutarique et l'acide méthylglutarique, et la diamine étant choisie parmi la 2-méthylpentaméthylènediamine et le 1,6-diaminohexane, un vecteur liquide et éventuellement des additifs dissous ou dispersés dans le vecteur liquide.

<u>DESCRIPTION DETAILLEE DE L'INVENTION</u>

UTILISATION

L'invention met en oeuvre un sel de diamine et de diacide carboxylique, dont le diacide carboxylique, appelé « diacide », est choisi parmi l'acide succinique, l'acide glutarique et l'acide méthylglutarique.

Le sel de diamine et de diacide carboxylique selon l'invention met aussi en oeuvre une diamine.

La diamine est choisie parmi la 2-méthylpentaméthylènediamine et l'hexaméthylène diamine (1,6- diaminohexane).

Selon une variante de l'utilisation selon l'invention, le sel est un sel mixte de diamines et de diacides, dont au moins l'un des diacides étant tel que défini à précédemment. On entend par « sel mixte » un sel d'au moins deux diacides différents et d'une ou plusieurs diamines. Par exemple, il peut s'agir d'un sel entre un mélange de diacides tels que l'acide succinique, et l'acide glutarique avec une diamine comme l'hexaméthylène diamine.

L'utilisation comme agent inhibiteur de gonflement des argiles en milieu aqueux du sel de diamine et de diacide carboxylique selon l'invention, est avantageusement une utilisation dans un milieu aqueux étant un fluide de forage ou de fracturation hydraulique.

Fluides de forage

Les fluides de forages sont connus de l'homme du métier. La composition exacte du fluide peut dépendre de la destination du fluide. Elle peut dépendre notamment des températures et pressions auxquelles le fluide sera soumis, de la nature des roches traversées par le puits, et de la nature des équipements de forage.

D'une façon générale, le fluide de forage, appelé aussi boue de forage, est un système liquide et/ou gazeux contenant des additifs. Les principaux rôles du fluide de forage sont :

- assurer la remontée des déblais du fond du puits jusqu'à la surface,
- maintenir les déblais en suspension lors d'un arrêt de circulation dans le but d'empêcher la sédimentation des déblais afin de redémarrer le forage sans blocage et ceci est possible grâce à la nature thixotrope du fluide.
- refroidir et lubrifier l'outil pour éviter l'usure prématurée des pièces métalliques en mouvement.
- maintenir les parois du puits en raison de la pression hydrostatique exercée par la boue de forage et permettre de contrôler la venue des fluides des formations rocheuses traversées.

La boue ne doit être ni corrosive ni abrasive pour l'équipement, ni toxique ou dangereuse pour le personnel et elle ne doit pas présenter de risque d'incendie.

Dans les fluides de forage, les propriétés rhéologiques et de filtration sont souvent ajustées par des additifs. La nature des électrolytes et leur concentration dans les formulations de boues sont choisies en prenant en compte les caractéristiques de la formation.

Parmi les additifs incontournables pour les compositions de fluide de forage, on trouve les inhibiteurs de gonflement des argiles.

Fluides de fracturation hydraulique :

La fracturation hydraulique est une technique largement employée par l'industrie pétrolière et gazière pour améliorer l'exploitation des réservoirs de faible perméabilité. Le fluide de fracturation est pompé vers le fond du puits à des débits et pressions élevée afin que la pression exercée génère des fractures la roche réservoir.

Le principe en est donc simple : on injecte un fluide sous pression dans la roche de façon à la casser et à ouvrir des fractures par où les hydrocarbures pourront s'écouler vers le puits.

La mise en oeuvre du principe est plus complexe : on doit ajouter divers additifs au fluide injecté pour éviter que les fractures ne se referment dès que la pression diminue à la fin de l'opération d'injection.

Pour maintenir les fractures ouvertes pendant l'injection, l'additif couramment utilisé est un agent de soutènement.

On utilise par exemple des billes de céramique, des grains de sable calibrés qui vont pénétrer dans les fractures pour qu'elles restent ouvertes. On ajoute en général au fluide de fracturation un épaississant pour que les particules d'agent de soutènement soient entrainées dans les fractures pendant l'injection et ne sédimentent pas au fond du puits. Cette sédimentation serait particulièrement préjudiciable dans le cas de puits horizontaux.

La plupart des formations rocheuses contiennent de fines particules d'argiles et plus particulièrement dans le cas où les roches réservoir sont de nature argileuse, l'eau du fluide de fracturation va faire gonfler les argiles ce qui va limiter la perméabilité du réseau de fractures au passage des hydrocarbures. Par ailleurs, lors de l'opération de fracturation, des particules dites « fines » d'argile peuvent se détacher des parois et ensuite colmater, au moins partiellement, les interstices entre les particules d'agent de soutènement (« proppant pack ») et donc réduire considérablement la production du puits. Il y a donc, dans le cas des compositions de fluide de fracturation hydraulique également un besoin de rajouter des additifs pour empêcher le gonflement des argiles.

La composition de fluide de forage ou de fracturation hydraulique comprend au moins un sel de diamine et de diacide selon l'invention, un vecteur liquide et éventuellement des additifs dissous ou dispersés dans le vecteur liquide. Le sel de diamine et de diacide selon l'invention est tel que défini plus haut dans la description et il joue le rôle d'inhibiteur de gonflement des argiles.

La teneur en agent inhibiteur de gonflement des argiles dans la composition de fluide de forage ou de fracturation est avantageusement comprise entre 0,01 % et 10 % en poids, de préférence entre 0,1 % et 5 %, et encore plus préférablement entre 0,3 % et 3 %.

Traditionnellement, les fluides de forage liquides sont « à l'eau » ou « à l'huile ». Les boues à huile sont plus coûteuses que les boues à l'eau, mais peuvent être préférées dans le cas de forage de puits très profonds (conditions de forage HP/HT ; haute pression haute température). Le sel de diamine et de diacide selon l'invention peut être utilisé avec les deux types de vecteurs. Toutefois, les vecteurs à base d'eau (boue à l'eau) sont préférés. Le vecteur liquide est de préférence de l'eau ou une émulsion d'huile dans l'eau.

La composition de fluide de forage ou de fracturation hydraulique comprend avantageusement des additifs dissous ou dispersés dans le vecteur liquide. On peut choisir notamment parmi :

- les viscosifiants, en particulier des polymères synthétiques ;
- les réducteurs de filtrat, par exemple choisis parmi les amidons ou amidons modifiés, carboxyméthylcelluloses ou CMC, celluloses polyanioniques (PAC), ou résines ;
- les agents inhibiteurs de gonflement des argiles différents du sel de diamine et de diacide selon l'invention, comme par exemple KCl, glycérol, silicates ou divers polymères comme le polyacrylamide partiellement hydrolysé (PHPA), les polyalkylèneglycols (PAG).

De manière avantageuse, la composition de fluide de forage comprend en outre au moins un additif dissous ou dispersé dans le vecteur liquide, choisi parmi :

i) des viscosifiants, par exemple des argiles naturelles (souvent des bentonites), des polymères synthétiques ou des biopolymères;

ii) des réducteurs de filtrat servant à consolider le gâteau de filtration pour limiter l'invasion de la roche par le fluide de forage comme par exemple, des amidons et amidons modifiés, carboxyméthylcelluloses ou CMC, celluloses polyanioniques (PAC), ou résines;

iii) d'autres inhibiteurs de gonflement et de dispersion des argiles comme par exemple KCl, glycérol, silicates ou divers polymères comme le polyacrylamide partiellement hydrolysé (PHPA), les polyalkylèneglycols (PAG);

iv) des agents alourdissant comme la barytine ("barite" ou sulfate de baryum $BaSO_4$) et la calcite (carbonate de calcium $CaCO_3$) qui sont les plus utilisés pour assurer à la boue une densité convenable. On note aussi l'utilisation de l'hématite ($Fe_2O_3$) ou de la galène (PbS).

Si nécessaire, on peut aussi utiliser des agents colmatant comme par exemple des granuleux (coquilles de noix), des fibreux (fibres de bois, canne à sucre), et des lamellaires (coquilles d'huîtres, céréales).

Par ailleurs, d'autres additifs peuvent entrer dans la composition du fluide de forage. Ainsi, on peut mentionner les agents de transfert de radicaux libres, des biocides, des agents chélatants, des tensioactifs, des anti-mousses, des agents anticorrosion par exemple.

La composition de fluide de fracturation hydraulique comprend généralement un vecteur liquide étant de préférence un fluide aqueux, des additifs dissous ou dispersé dans le vecteur liquide et un agent de soutènement. L'agent de soutènement est choisi selon la nature géologique de la formation et le type d'hydrocarbure à produire, de préférence parmi des sables, des céramiques et des polymères, éventuellement traités.

Parmi les additifs pouvant entrer dans la composition de fluide de fracturation hydraulique on peut trouver :

i) des viscosifiants comme par exemple des polymères synthétiques, notamment le polyacrylamide et les copolymères de polyacrylamide ou biopolymères comme le guar et le guar modifié ou des tensioactifs formant des phases organisées de type micelle géante ;

ii) des réticulants tels que les borate ou zirconate permettant de conférer une rhéologie viscoélastique au fluide ;

iii) d'autres inhibiteurs de gonflement et de dispersion des argiles comme par exemple KCl, glycérol, silicates ou divers polymères comme le polyacrylamide partiellement hydrolysé (PHPA), les polyalkylèneglycols (PAG) ;

iv) des agents de réduction de friction comme des polyacrylamides et les copolymères de polyacrylamide de masse molaire très élevées ;

v) des agents permettant de nettoyer les fractures juste après leur formations tels que des oxydants ou des enzymes qui vont dégrader les polymères utilisés pour le contrôle rhéologique ou la réduction de friction pendant le pompage du fluide de fracturation ;

La composition de fluide de fracturation peut en outre contenir des agents permettant de tamponner le pH, des bactéricides, des tensioactifs ou des réducteurs de filtrat.

PROCEDES

La présente invention vise également un procédé de forage dans lequel on met en oeuvre dans au moins une étape une composition de fluide de forage telle que décrite précédemment.

Les opérations de forage consistent généralement à creuser un trou au moyen d'un trépan, fixé à des tiges creuses vissées bout à bout. Le plus souvent, la boue est initialement formulée dans un bac de fabrication disponible sur la plateforme où les différents ingrédient sont mélangés au fluide de base de la boue comprenant des additifs en solution aqueuse, est injectée dans le train de tiges pendant toute la période d'avancement du forage. Cette boue remonte ensuite par le trou de sonde, à l'extérieur des tiges, et entraîne des éléments de roches détachés lors de l'opération de forage. La boue est ensuite extraite du trou de forage pour être débarrassée des roches le plus souvent par tamisage ou centrifugation qu'elle contient avant d'être injectée à nouveau dans les tiges creuses de forage.

La présente invention vise aussi un procédé de fracturation hydraulique dans lequel on met en oeuvre dans au moins une étape une composition de fluide de fracturation hydraulique telle que décrite précédemment.

La fracturation hydraulique est effectuée en fracturant la roche par une contrainte mécanique à l'aide d'un fluide injecté sous haute-pression à partir d'un forage de surface, pour en augmenter la macro porosité et moindrement la microporosité.

La fracturation hydraulique fait intervenir l'injection du fluide de fracturation hydraulique sous haute pression dans la roche réservoir pour y propager des fractures, ce qui permet de faciliter la production des hydrocarbures qui s'y trouvent.

L'opération de fracturation est réalisée soit juste après le creusement du puits pour en initier la phase de production, soit après un certain temps d'exploitation alors que la production tend à décliner. La fracturation hydraulique est par exemple réalisée comme suit :

1. Dans la zone à fracturer, des fractures sont amorcées par un pistolet perforateur (à travers un tubage perforé).
2 Le fluide de forage préalablement formulé dans un équipement de surface est pompé sous haute pression
3. Des agents de soutènement sont additivés au fluide de fracturation soit pendant toute l'opération de fracturation, soit, plus fréquemment, lorsque la progression de la fracture est suffisante pour y introduire cet agent.
4. Lorsque la progression de la fracture est jugée satisfaisante, l'injection est interrompue et le puits est maintenu en dormance le temps que les oxydants ou enzymes injectés avec le fluide dégradent les polymères (agents rhéologiques ou de réduction de friction).
5. Le puits est ensuite remis en production.

MESURES

Viscosité et contrainte seuil

Les fluides de forage ou de fracturation ont un comportement typique de fluide de Bingham caractérisé par deux grandeurs principales d'une part la viscosité sous écoulement ou viscosité plastique notée PV et exprimée en centiPoise (cP ou m.Pa.s) et d'autre part la contrainte seuil notée YP (Pa).

Ces grandeurs sont déterminées expérimentalement , à l'aide d'un rhéomètre AR2000 (TA Instrument, Surrey, Grande-Bretagne), équipé d'une géométrie de type plan-plan strié de diamètre 40mm avec un entrefer de 1mm. Le rhéomètre est utilisé pour effectuer à 25°C, un balayage en gradient de cisaillement entre 1 et 1000s$^{-1}$. La contrainte ($\tau$) est tracée en fonction du gradient de cisaillement ($\dot{\gamma}$) et les valeurs de viscosité plastique et de seuil d'écoulement sont déterminées en utilisant la relation ci-dessous dite de Bingham, adaptée pour les fluides à seuil :

$$\tau = YP + PV \times \dot{\gamma}$$

L'ajustement des courbes expérimentales et la détermination des valeurs expérimentales de YP et PV est réalisées au moyen du logiciel de traitement de données Rheology advantage data analysis V5.7.0, fourni par TA instruments.

Limite de gélification

L'effet inhibiteur de gonflement d'argile d'un additif est déterminé en évaluant son impact sur le gonflement dans un volume de fluide donné de quantités variables d'argile normalisée dite argile API (pour American Petroleum Institute qui normalise les caractéristiques des argiles de test dans Recommended practice for Drilling-fluids materials API specifications 13A 16th edition Feb 2004).

La valeur maximale d'argile pouvant être introduite notée Limite de gélification est la masse maximale d'argile pouvant être dispersée dans 100mL de fluide contenant l'inhibiteur de gonflement tout en conservant un volume de fluide libre. Au-delà de cette valeur, l'argile occupe l'ensemble du volume de fluide et une gélification est observée.

La limite de gélification est déterminée après 4 heures de repos à température ambiante précédée d'un temps d'hydratation de l'argile dans le fluide de 16h à une température de 60°C. Pendant cette période d'hydratation les échantillons sont agités dans une étuve de roulage (roller oven) permettant d'éviter la sédimentation de l'argile, assurant donc une hydratation homogène dans tous l'échantillon. Cette méthode d'homogénéisation des échantillons est communément appelée « hot-rolling » dans l'industrie du pétrole.

D'autres détails ou avantages de l'invention apparaîtront plus clairement au vu des exemples ci-dessous, sans caractère limitatif.

EXEMPLES

Les diamines aliphatiques utilisées sont le 2-méthylpentane-1,5-diamine, 99.6%, Rhodia (MPMD) et le 1-6-hexaméthylènediamine, 100%, Rhodia (HMD).

L'AGS, Rhodia est un mélange d'acide adipique (15-35%), d'acide glutarique (40-60%) et d'acide succinique (10-25%).

Exemple 1 : *Préparation d'un agent inhibiteur de gonflement des argiles*

Dans un ballon en verre quadricol de 500 mL, muni d'une agitation mécanique, d'une sonde de température, d'une ampoule de coulée et d'un condenseur, sont introduits sous agitation 82,2 g d'HMD (0,707 moles) et 10 g d'eau.

La température du milieu est portée à 50°C grâce à un chauffe ballon électrique. Une quantité stoechiométrique d'acide succinique (83,5 g soit 0,707 moles) est ensuite ajoutée très progressivement et alternativement avec de l'eau (87 g) pour s'assurer de sa solubilisation tout en contrôlant l'exothermie de la réaction.

Au maximum le milieu réactionnel est porté jusqu'à 108°C. Le milieu réactionnel est limpide.

Le milieu réactionnel est ensuite refroidi dans un bain de glace. Le sel cristallise. 100 mL d'éthanol sont enfin ajoutés pour faire précipiter davantage de sel. Le sel est filtré et lavé à l'éthanol, puis séché en étuve à 60°C pendant une nuit.

La masse obtenue de sel de succinate d'hexaméthylènediamine est de 145,7 g (soit un rendement expérimental de 88 %). Une solution aqueuse à 10 % en poids de ce sel présente un pH de 7.

Exemple 2 à 6 et C1 à C6 :

La lettre C indique qu'il s'agit d'exemples comparatifs.

Les exemples 2 à 6 et C2, C3 et C5 sont préparés de manière similaire à celle décrite dans l'exemple 1. Pour tous ces sels, le pH d'une solution aqueuse à 10 % en poids est proche de 7.

Les exemples comparatifs C1, C4 et C6 ne sont pas réalisés selon le mode opératoire décrit précédemment. Les diamines des exemples C1 et C4 sont utilisées directement lors du test de gonflement des argiles décrit ci après. L'acide polyacrylique (Mn 2000 g/mol) de l'exemple C6 est neutralisé lors de la préparation de la formulation du test de gonflement des argiles par ajout d'une quantité stoechiométrique en fonction acide carboxylique de fonction amine d'hexaméthylènediamine.

Les compositions sont résumées dans le tableau 1 :

Tableau 1

| Exemples | C1 | C2 | C3 | C4 | C5 | C6 | 1 | 2 | 3 | 4 | 5 | 6 |
|---|---|---|---|---|---|---|---|---|---|---|---|---|
| **Acide** | | | | | | | | | | | | |
| Acide chlorhydrique | x | | | x | | | | | | | | |
| Acide formique | | x | | | | | | | | | | |
| Acide adipique | | | x | | x | | | | | | | |
| Polyacide acrylique | | | | | | x | | | | | | |
| Acide succinique | | | | | | | x | | x | | | |
| Acide méthylglutarique | | | | | | | | x | | | x | |
| Acide glutarique | | | | | | | | | | x | | |
| AGS | | | | | | | | | | | | x |
| **Diamine** | | | | | | | | | | | | |
| HMD | x | x | x | | | x | x | x | | | | |
| MPMD | | | | x | x | | | | x | x | x | x |

Test de gonflement des argiles (« hot roll test ») :

Le gonflement des argiles est déterminé par un test d'hydratation de 16h dans une étude de roulage (roller oven) à 60°C. La limite de gélification est déterminée par observation directe des échantillons après un temps de repos de 4h à température ambiante.

Les différents agents d'inhibition de gonflement des argiles sont dosés à 1% en amine active dans de l'eau déionisée. Des masses variables d'argile API sont ajoutées à 20mL de fluide contenant l'inhibiteur, pour déterminer la limite de gélification pour chaque inhibiteur de gonflement.

Les propriétés rhéologiques des échantillons ainsi préparés sont également caractérisées par une mesure de rhéologie telle que décrite précédemment et les grandeurs de viscosité plastique et de seuil d'écoulement sont déterminées au moyen de la relation de Bingham. Dans le but de comparer les propriétés relatives des différents inhibiteurs de gonflement, les propriétés rhéologiques sont données pour une concentration identique en argile de 37.5g pour 100mL de fluide.

Les résultats des tests ainsi que les propriétés rhéologiques sont rapportés dans le tableau 2 ci-dessous pour les exemples 1 à 6 et les exemples comparatifs C1 à C6.

Tableau 2 :

| Exemples | Contre-ion | Diamine* | Limite de gélification (g/100mL) | Viscosité plastique PV (mPa.s, à 37.5g/100mL) | Contrainte seuil YP (Pa, à 37.5g/100mL) |
|---|---|---|---|---|---|
| **C1** | Chlorure | HMD | 37,5 | 20 | 22 |
| **C2** | formate | HMD | 35,0 | 22 | 24 |
| **C3** | adipate | HMD | 32,5 | 33 | 33 |
| **1** | succinate | HMD | 32,5 | 20 | 20 |
| **2** | méthylglutarate | HMD | 32,5 | 24 | 21 |
| **C4** | Chlorure | MPMD | 37,5 | 18 | 15 |
| **C5** | adipate | MPMD | 35,0 | 39 | 43 |
| **C6** | polyacrylate | MPMD | 30,0 | 91 | 110 |
| **3** | succinate | MPMD | 37,5 | 33 | 24 |
| **4** | glutarate | MPMD | 37,5 | 26 | 18 |
| **5** | méthylglutarate | MPMD | 40,0 | 22 | 17 |
| **6** | AGS | MPMD | 37,5 | 45 | 23 |
| * Diamine à 1% en poids. | | | | | |

Plus la contrainte seuil est basse, meilleures sont les performances de l'agent d'inhibition de gonflement des argiles. Une limite de gélification élevée et une viscosité basse sont également un avantage.

L'utilisation d'un sel de diacide linéaire en C6 dans sa chaine principale (i.e. l'acide adipique des exemples C3 et C5) dégrade très significativement les propriétés d'inhibition recherchées, de même que l'utilisation d'un polyacide comme l'acide polyacrylique (exemple C6).

En revanche, il apparaît que l'utilisation de sels de diacides organiques selon l'invention permet d'assurer un compromis de propriétés très valorisable :

- maintenir les propriétés d'inhibition de gonflement des argiles à des niveaux comparables aux essais de référence C1, C2 et C4.
- éviter l'utilisation de chlorures qui ont un effet délétère sur les ciments utilisés dans le domaine,
- éviter la libération accidentelle de monoacide organiques volatils comme l'acide formique en cas d'acidification du milieu.

**Revendications**

1. Utilisation comme agent inhibiteur de gonflement des argiles en milieu aqueux, d'un sel de diamine et de diacide carboxylique, le diacide étant choisi parmi l'acide succinique, l'acide glutarique et l'acide méthylglutarique, et la diamine étant choisie parmi la 2-méthylpentaméthylènediamine et le 1,6-diaminohexane.

2. Utilisation selon la revendication 1, le milieu aqueux étant un fluide de forage ou de fracturation hydraulique.

3. Procédé de forage dans lequel on met en oeuvre dans au moins une étape une composition de fluide de forage comprenant au moins un sel de diamine et de diacide tel que défini à la revendication 1, un vecteur liquide et éventuellement des additifs dissous ou dispersés dans le vecteur liquide.

4. Procédé de fracturation hydraulique dans lequel on met en oeuvre dans au moins une étape une composition de fluide de fracturation hydraulique comprenant au moins un sel de diamine et de diacide tel que défini à la revendication 1, un vecteur liquide et éventuellement des additifs dissous ou dispersés dans le vecteur liquide.

**Patentansprüche**

1. Verwendung, als Mittel zur Hemmung der Quellung von Ton in einem wässrigen Medium, eines Diamin- und Dicarbonsäuresalzes, wobei die Disäure aus Bernsteinsäure, Glutarsäure und Methylglutarsäure ausgewählt ist, und das Diamin aus 2-Methylpentamethylendiamin und 1,6-Diaminohexan ausgewählt ist.

2. Verwendung nach Anspruch 1, wobei das wässrige Medium ein Bohr- oder hydraulisches Fracking-Fluid ist.

3. Bohrverfahren, wobei in mindestens einem Schritt eine Zusammensetzung eines Bohrfluids verwendet wird, umfassend mindestens ein Diamin- und Disäuresalz, wie in Anspruch 1 definiert, einen flüssigen Träger und gegebenenfalls Additive, die in dem flüssigen Träger gelöst oder dispergiert sind.

4. Hydraulisches Fracking-Verfahren, wobei in mindestens einem Schritt eine Zusammensetzung eines hydraulischen Fracking-Fluids verwendet wird, umfassend mindestens ein Diamin- und Disäuresalz, wie in Anspruch 1 definiert, einen flüssigen Träger und gegebenenfalls Additive, die in dem flüssigen Träger gelöst oder dispergiert sind.

**Claims**

1. Use, as an inhibitor of the swelling of clays in an aqueous medium, of a diamine-dicarboxylic acid salt, the diacid being chosen from succinic acid, glutaric acid and methylglutaric acid, and the diamine being chosen from 2-methylpentamethylenediamine and 1,6-diaminohexane.

2. Use according to Claim 1, the aqueous medium being a drilling fluid or a hydraulic fracturing fluid.

3. Drilling process in which use is made, in at least one step, of a drilling fluid composition comprising at least one diamine-diacid salt as defined in Claim 1, a liquid carrier and optionally additives dissolved or dispersed in the liquid carrier.

4. Hydraulic fracturing process in which use is made, in at least one step, of a hydraulic fracturing fluid composition comprising at least one diamine-diacid salt as defined in Claim 1, a liquid carrier and optionally additives dissolved or dispersed in the liquid carrier.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060289164 A
- US 20020155956 A
- FR 2185745

**Littérature non-brevet citée dans la description**

- Recommended practice for Drilling-fluids materials API specifications. American Petroleum Institute, Février 2004, vol. 13A